(19) Europäisches Patentamt
European Patent Office
Office européen des brevets

(11) Veröffentlichungsnummer: **0 033 897**
**A1**

(12) # EUROPÄISCHE PATENTANMELDUNG

(21) Anmeldenummer: **81100584.2**

(22) Anmeldetag: **28.01.81**

(51) Int. Cl.³: **C 08 G 18/67**
// C09D3/72

(30) Priorität: **11.02.80 DE 3005035**

(43) Veröffentlichungstag der Anmeldung: **19.08.81 Patentblatt 81/33**

(84) Benannte Vertragsstaaten: **AT BE CH DE FR GB LI NL**

(71) Anmelder: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Hartmann, Heinrich, Dr., Weinheimer Strasse 46, D-6703 Limburgerhof (DE)**
Erfinder: **Heil, Guenter, Dr., Dirmsteiner Weg 41, D-6700 Ludwigshafen (DE)**
Erfinder: **Lenz, Werner, Dr., Heinrich-Baermann-Strasse 14, D-6702 Bad Duerkheim (DE)**
Erfinder: **Buethe, Ingolf, Dr., Seckenheimer-Strasse 11-13, D-6800 Mannheim (DE)**
Erfinder: **Bachmann, Rudolf, Dr., Winklerstrasse 12, D-6710 Frankenthal (DE)**

(54) **Verfahren zur Herstellung von polymerisierbaren Polyurethanelastomeren.**

(57) Die Erfindung betrifft ein Verfahren zur Herstellung polymerisierbarer Polyurethanelastomerer. Polymerisierbare, im wesentlichen lineare, thermoplastische, in organischen Lösungsmitteln lösliche Polyurethanelastomere mit Acrylesterseitengruppen werden aus Hydroxylgruppen enthaltenden Polyäthern und/oder Polyestern, Diisocyanaten und gegebenenfalls Kettenverlängerungsmitteln mit reaktionsfähigen Wasserstoffatomen hergestellt, wobei die Polyurethane durch Umsetzung von Diisocyanaten mit einem Gemisch aus Acrylesterdiolen mit Molekulargewichten von 146 bis 3000, anderen davon verschiedenen organischen Polyhydroxylverbindungen mit Molekulargewichten zwischen 400 und 5000 sowie gegebenenfalls weiteren Diolen, Diaminen, Aminoalkoholen oder Triolen mit Molekulargewichten zwischen 61 und 400 und/oder Wasser im NCO/OH-, (NH)-Verhältnis von 0,8:1 bis 1,2:1, mit der Maßgabe, daß pro Mol der Polyhydroxylverbindungen 1,4 bis 1,8 Mol Diisocyanat und 0,3 bis 6 Mol Acrylesterdiol verwendet werden, erhalten werden.

Die erfindungsgemäßen Polyurethanelastomeren eignen sich z. B. zur Herstellung von Überzugsmaterialien.

EP 0 033 897 A1

# Verfahren zur Herstellung von polymerisierbaren Polyurethanelastomeren

Die vorliegende Erfindung betrifft ein Verfahren zur Herstellung von polymerisierbaren, im wesentlichen linearen, thermoplastischen, in organischen Lösungsmitteln löslichen Polyurethanelastomeren mit Acrylesterseitengruppen.

Es ist bekannt, vernetzbare Polyurethane durch den Einbau von ungesättigten Diolen wie Butendiol herzustellen (DE-OS 23 00 371). Die Reaktivität dieser Doppelbindungen ist jedoch so gering, so daß die häufig erforderliche Vernetzung schwierig durchführbar ist.

Weiter ist die Herstellung von Polyurethanen mit Acrylatdoppelbindungen am Ende der Polyurethankette bekannt (DE-AS 1 644 797 und DE-AS 1 644 798). Dies hat jedoch den Nachteil, daß bei einem hohen Doppelbindungswert die Ketten entweder zu kurz, oder die Polymeren zu stark verzweigt sind. Beides führt zu mechanisch minderwertigen Polyurethanelastomeren.

Der vorliegenden Erfindung liegt die Aufgabe zugrunde, weitgehend lineare, elastische, praktisch unvernetzte hochreaktive Polyurethanharze mit Acrylesterseitengruppen herzustellen, die vor ihrer Verarbeitung löslich sind oder gelöst vorliegen, aber schon im unvernetzten Zustand hochwertige Überzüge, Ummantelungen, Beschichtungen usw. ergeben. Durch anschließende Vernetzung sollen die Polymeren unlöslich und chemikalienbeständiger werden, ohne jedoch die günstigen mechanischen Eigenschaften zu verlieren. Je nach Anforderung sollen Eigenschaften verbessert werden.

Ls/BL

So soll beispielsweise der Erweichungspunkt bzw. die Pendelhärte der Filme (nach König), der E-Modul bzw. die Reißkraft der Filme erhöht werden und zwar letzteres um den Faktor 1,3 bis 50 bevorzugt 1,4 bis 15.

Überraschenderweise läßt sich dies sehr vorteilhaft mit den erfindungsgemäßen Verfahren erreichen.

Gegenstand der vorliegenden Erfindung ist ein Verfahren zur Herstellung von polymerisierbaren, im wesentlichen linearen, thermoplastischen, in organischen Lösungsmitteln löslichen Polyurethanelastomeren mit Acrylesterseitengruppen aus Hydroxylgruppen enthaltenden Polyäthern und/oder Polyestern, Diisocyanaten und gegebenenfalls Kettenverlängerungsmitteln mit reaktionsfähigen Wasserstoffatomen, das dadurch gekennzeichnet ist, daß die Polyurethane durch Umsetzung von Diisocyanaten mit einem Gemisch aus

a) Acrylesterdiolen mit Molekulargewichten von 146 bis 3000, die gegebenenfalls bis zu 30 Mol.% Acrylestertriole enthalten können,

b) anderen von (a) verschiedenen organischen Polyhydroxylverbindungen mit Molekulargewichten zwischen 400 und 5000

sowie gegebenenfalls

c) von (a) und (b) verschiedenen Diolen, Diaminen, Aminoalkoholen oder Triolen mit Molekulargewichten zwischen 61 und 400 oder Wasser

im NCO/OH-Verhältnis von 0,8:1 bis 1,2:1, mit der Maßgabe, daß pro Mol der Komponente (b) 1,4 bis 1,8 Mol Diisocyanat, 0 bis 15 Mol der Komponente (c) und 0,3

bis 6 Mol der Komponente (a) verwendet werden, erhalten werden.

Die Vernetzung der erfindungsgemäß hergestellten Polyurethane kann, wie in der Literatur beschrieben, radikalisch oder ionisch geschehen. Bevorzugt, weil umweltfreundlich, sind die Elektronenstrahl- oder UV-Härtung.

Zur weiteren Verbesserung der Eigenschaften und Erhöhung der Vernetzungsdichte kann man 6 bis 50 Gew.% C-C-doppelbindungshaltige Mono- oder Polymere zusetzen.

Erfindungsgemäß kann die Einstellung der elastischen und thermoplastischen Eigenschaften hauptsächlich durch Variation des Verhältnisses von Diol (c), zu polymerem Diol (b) und Acrylsäureesterdiol (a) in weiten Grenzen erfolgen.

Wie vorstehend angedeutet, weisen die herkömmlichen quervernetzbaren Harze Nachteile vor allem hinsichtlich der Biegeeigenschaften auf, selbst dort, wo sie hinsichtlich ihrer Härte durchaus den Einsatzanforderungen genügen. Dieser Nachteil beruht im wesentlichen auf den geringen Molekulargewichten dieser Harze. Im Gegensatz dazu können die polymerisierbaren thermoplastischen Polyurethanelastomeren gemäß der Erfindung gegenüber den bekannten vernetzbaren synthetischen Harzen hoch polyaddiert werden. Die polymerisierbaren ungesättigten Gruppen bleiben also während der Polyurethanherstellung und danach erhalten. Mit anderen Worten, es können mehr polymerisierbare ungesättigte Gruppen in die Moleküle eingeführt werden. Dementsprechend wird die Aushärtbarkeit des Erzeugnisses auch nicht durch einen hohen Polymerisationsgrad vermindert. Zusätzlich zu diesen günstigen Bedingungen hinsichtlich der Kombination des hohen Polymerisationsgrads und

der guten Aushärtungseigenschaften weisen die Verbindungen gemäß der Erfindung verbesserte Elastizität auf.

Ferner sind die mit den erfindungsgemäß hergestellten Produkten erhaltenen vernetzten Elastomeren hinsichtlich ihrer Haftung auf Metallen und Kunststoffen sowie auch hinsichtlich ihrer Wasserbeständigkeit, Lösungsmittelfestigkeit und Bewitterungsbeständigkeit den unvernetzten Polyurethanharzen deutlich überlegen. Der Erweichungspunkt der zusätzlich durch Polymerisation vernetzten ungesättigten Polyurethanelastomeren gemäß der Erfindung im Vergleich zu ähnlichen Elastomeren des Standes der Technik ist erhöht. Auch eine hervorragende Widerstandsfähigkeit gegenüber Wasser und Witterungseinflüssen ist auf die Vernetzung zurückzuführen. Durch diese Kombination hervorragender Eigenschaften vermögen die Elastomeren gemäß der Erfindung auch einen breiteren Anwendungsbereich zu erfassen als es bei den bisher bekannten vernetzten synthetischen Harzen der Fall war.

Außerdem sind die Elastomeren gemäß der Erfindung wesentlich verbessert hinsichtlich ihrer mechanischen Festigkeit, ihrer chemischen Resistenz, vor allem hinsichtlich ihrer Widerstandsfähigkeit gegenüber Lösungsmitteln, wenn sie als Überzugsmaterial verwendet und vernetzt werden. Auch diese Eigenschaften sind auf das hohe Molekulargewicht, die Gegenwart der Urethanbindungen sowie auf die Gegenwart der noch polymerisierbaren ungesättigten Seitengruppen im Molekül zurückzuführen.

Zu den Aufbaukomponenten der erfindungsgemäßen Polyurethane ist folgendes auszuführen:

Als Polyisocyanate eignen sich die üblichen, aus der Polyurethanchemie bekannten Verbindungen, insbesondere Diisocyanate. Es können sowohl aromatische als auch alipha-

tische oder heterocyclische Diisocyanate verwendet werden, beispielsweise 4,4-Diphenylmethandiisocyanat, Dicyclohexylmethandiisocyanat, 1,5-Naphthylendiisocyanat, 2,4- und 2,6-Toluylendiisocyanat, Hexamethylendiisocyanat, Isophorondiisocyanat und Trimethylhexamethylendiisocyanat und Dicyclohexylmethandiisocyanat. Besonders geeignet sind Diphenylmethandiisocyanat, Isophorondiisocyanat, Hexamethylendiisocyanat und Dicyclohexylmethandiisocyanat. In einigen speziellen Fällen können auch teilweise verkappte Polyisocyanate verwendet werden, welche die Bildung zusätzlich vernetzender Polyurethane ermöglichen, z.B. dimeres Toluylendiisocyanat, oder mit beispielsweise Phenol, tert.-Butanol, Phthalimid oder Caprolactam partiell umgesetzte Polyisocyanate.

(a) Als Acrylesterdiole mit Molekulargewichten zwischen 146 und 3000, die gegebenenfalls bis zu 30 Mol.% Acrylestertriole enthalten können, eignen sich Reaktionsprodukte von Epoxidverbindungen mit polymerisierbaren olefinisch ungesättigten Carbonsäuren, insbesondere Acryl- und Methacrylsäure, wobei jeweils etwa auf jede Epoxidgruppe eine Carboxylgruppe kommt, sowie Reaktionsprodukte von Dicarbonsäuren mit polymerisierbaren olefinisch ungesättigten Glycidylverbindungen, wie sie z.B. in der DE-OS 21 64 386 beschrieben sind.

Als ungesättigtes Acrylesterdiol eignen sich auch Umsetzungsprodukte aus OH-Gruppen-tragenden Monoepoxyden wie Glycidol mit (Meth)-Acrylsäure.
Geeignete polymerisierbare Diole (Polyole) können z.B. aus Epoxiden mit zwei endständigen Epoxidgruppen gemäß der allgemeinen Formel (vgl. auch US-PS 3 373 075)

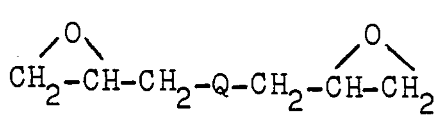

erhalten werden, in der Q ein zweibindiges Radikal bedeutet, z.B. $-O-$, $-O-(\overset{R^1}{C}H-CH_2-O)_n$ mit n = 1-10, wobei $R^1$ für Wasserstoff oder Methyl steht, d.h. also z.B. ein von Äthylenglykol, Propylenglykol, Polyäthylenglykol oder Polypropylenglykol abgeleitetes Radikal, ein $-O-(CH_2)_m-O-$Rest mit m = 1 bis 10, vorzugsweise 1 bis 7, ist, oder Q für den Rest der allgemeinen Formel

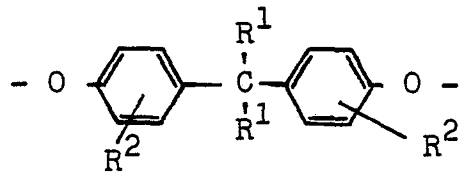

steht, wobei $R^1$ für Wasserstoff oder eine Methylgruppe und $R^2$ für Wasserstoff oder einen aliphatischen Rest mit 1 bis 10 Kohlenstoffatomen stehen und wobei dieses Radikal beispielsweise von 4.4-Dihydroxydiphenylmethan, Bisphenol A oder kernsubstituierten Derivaten dieser Verbindungen hergeleitet werden kann. Die Umsetzungsprodukte der Epoxidverbindungen mit Acryl- und/oder Methacrylsäure sollten bei der späteren Umsetzung mit Diisocyanaten weitgehend bifunktionell in Bezug auf OH-Gruppen sein. Bei einer OH-Funktionalität $>3$ besteht sonst die Gefahr der Vernetzung.

Die Umsetzung zwischen den Epoxidverbindungen und den polymerisierbaren olefinisch ungesättigten Säuremonomeren ist eine ringöffnende Veresterung zwischen den Epoxidgruppen der Diepoxidverbindungen und den Carboxylgruppen der polymerisierbaren (Meth)acrylsäure, die etwa analog der DE-OS 21 64 386 in bekannter Weise ausgeführt werden kann (vgl. auch US-PS 3 373 075) und US-PS 28 24 851).

Die vorgenannten Epoxidverbindungen und deren Umsetzungsprodukte können allein oder im Gemisch verwendet werden. Als Komponente (a) eignen sich bevorzugt Umsetzungsprodukte aus Bisphenol A-Diglycidyläther (z.B. ® Epikote 828 der Fa. Shell) oder 2,3-Epoxpropanol-1 (Glycidol) mit Acryl- oder Methacrylsäure.

Die ungesättigten Polyurethane werden durch Umsetzen von Diisocyanaten mit den so erhaltenen (Meth-)-acrylesterdiolen mit einem Molekulargewicht von 146 bis 3000 (a), Dihydroxylverbindungen mit einem Molekulargewicht von 400 bis 5000 (b) und ggf. Kettenverlängerungsmitteln (c) in Lösung hergestellt.

(b) Als von (a) verschiedene organische Polyhydroxylverbindungen mit Molekulargewichten zwischen 400 und 5000, vorzugsweise zwischen 500 und 4000, eignen sich im wesentlichen lineare Polyester, Polycarbonate, Polylactone (z.B. Polycaprolacton) und Polyäther. Außer endständigen Hydroxylgruppen können derartige Verbindungen auch Carboxyl-, Amino- oder Mercaptogruppen enthalten. Bevorzugt sind Polyhydroxylverbindungen wie Polyäther und Polyester.

Als Polyäther seien z.B. die Polymerisationsprodukte des Äthylenoxyds, Propylenoxyds, Tetrahydrofurans, Butylenoxyds sowie ihre Misch- oder Pfropfpolymerisationsprodukte sowie die durch Kondensation von mehrwertigen Alkoholen oder Mischungen derselben gewonnenen Kondensate oder die durch Alkoxylierung von mehrwertigen Alkoholen gewonnenen Produkte genannt.

Geeignete Polyester (b) sind z.B. Veresterungsprodukte von Adipinsäure mit $C_2$-$C_{10}$-Alkandiolen oder Oxalkandiolen. Geeignete Polycarbonate sind z.B. Hexandiolpolycarbonate.

Besonders geeignete Polyole sind z.B. Polytetrahydrofuran (MG 1000 und MG 2000), Polypropylenglykol (MG 1000) oder Adipate mit Glykol (MG 2000), mit Diäthylenglykol (MG 2000), mit Butandiol 1,4 (MG 940), mit Hexandiol-1,6:Butandiol-1,4 = 1:1 (MG 1000 bzw. 2000) mit Hexandiol-1,6 und 2,2-Dimethyl-Propandiol-1,3 (MG 1000) oder Polycaprolactone (MG 830 und 2000). Selbstverständlich lassen sich auch Gemische dieser Polyole verwenden.

c) Als gegebenenfalls mitzuverwendende, von (a) und (b) verschiedene Diole, Diamine, Aminoalkohole oder Triole mit Molekulargewichten zwischen 61 und 400 eignen sich entsprechende Kettenverlängerungsmittel mit reaktionsfähigen Wasserstoffatomen, z.B. die üblichen gesättigten oder ungesättigten Glykole, wie Äthylenglykol oder Kondensate des Äthylenglykols, Butandiol, Propandiol-1.2, Propandiol-1.3, Neopentylglykol, Hexandiol-1,6, Decandiol-1,10, Dioxäthoxy-hydrochinon, Butendiol, Dioxäthyldian, mono-/oder bisalkoxylierte aliphatische, cycloaliphatische, aromatische oder heterocyclische primäre und sekundäre Amine, wie beispielsweise Äthanolamin, N-Methyläthanolamin, N-Butyläthanolamin, N-Oleyläthanolamin, N-Cyclohexylisopropanolamin, polyäthoxyliertes N-Butyläthanolamin, tertiäre Amine, wie N-Methyldiäthanolamin, N-Butyldiäthanolamin, N,N-Bis-α-aminopropyl-N-methylamin, N-Oleyldiäthanolamin, N-Cyclohexyldiisopropanolamin, N-N-Dioxäthyl-p-toluiidin, N,N-Dioxypropylnaphthylamin, polyäthoxyliertes N-Butyldiäthanolamin, die

aliphatischen, cycloaliphatischen oder aromatischen Diamine, wie Äthylendiamin, Hexamethylendiamin, 1,4-Cyclohexylendiamin, Benzidin, Diaminodiphenylmethan, die Isomeren des Phenylendiamins oder Hydrazin, Aminoalkohole, wie Äthanolamin, Propanolamin oder Butanolamin. Gegebenenfalls kann auch Wasser als Kettenverlängerungsmittel verwendet oder mitverwendet werden. Mehrfunktionelle Alkohole, wie Trimethylolpropan, Glycerin usw. sollten in weniger als 10 Äquivalent-% verwendet werden.

Die Komponenten (a), (b) und (c) werden im allgemeinen in Mengen von 100 : (10 bis 400) : (0 bis 30), vorzugsweise 100 : (20 bis 300) : (1 bis 20) eingesetzt.

Bei der Wahl des Lösungsmittels ist zu beachten, daß bei der Herstellung der Polyurethanmasse kein Lösungsmittel verwendet wird, das unter den Reaktionsbedingungen mit Isocyanatgruppen reagierende funktionelle Gruppen besitzt. Im erfindungsgemäßen Verfahren kann jedes beliebige Lösungsmittel eingesetzt werden, das mit der Polyurethanmasse und den Reaktionspartnern nicht in Reaktion tritt. Bevorzugte Lösungsmittel sind gegebenenfalls halogenierte Kohlenwasserstoffe, Ketone, tertiäre Alkohole, Äther, Ester oder Nitrile, wie z.B. Aceton, Methyläthylketon, tert.-Butanol, Acetonitril, Äthylacetat, Methylenchlorid, Chloroform, Tetrachlorkohlenstoff, Dimethylformamid, Dimethylsulfoxyd, Tetrahydrofuran oder Dioxan. Selbstverständlich können auch Mischungen derartiger Lösungsmittel verwendet werden.

Die Herstellung der Polyurethane erfolgt unter den aus der Literatur bekannten üblichen Bedingungen der Polyaddition in Lösung oder im Batch.

Da die erfindungsgemäß hergestellten Polyurethane häufig in Lösung verarbeitet werden, wird für die Herstellung der Polyurethane zweckmäßigerweise die Lösungspolymerisation bevorzugt. Hierfür bieten sich das Ein- und Zweistufenverfahren an.

Beim Einstufenverfahren werden alle Reaktionsteilnehmer in einem Teil des Lösungsmittels vorgelegt und unter Rühren auf 30 bis 70°C erwärmt. Im Laufe der Reaktion - Anstieg der Viskosität - wird stufenweise auf die gewünschte Endkonzentration verdünnt und anschließend die Reaktion, z.B. mit Alkoholen oder sec. Aminen abgestoppt. Beim Zweistufenverfahren wird in einem Teil des Lösungsmittels das Polyol und das Diisocyanat vorgelegt und unter Rühren auf 30 bis 70°C erwärmt. Nach einer Reaktionszeit von etwa 1/2 bis 2 Stunden wird unter Rühren bei etwa 30 bis 70°C im Laufe von ca. 1/2 bis 3 Stunden der Kettenverlängerer zugegeben. Der weitere Reaktionsverlauf erfolgt wie bei der Einstufenfahrweise. Die Polyaddition kann mit und ohne Katalysatoren durchgeführt werden. Geeignete Katalysatoren sind z.B. tert.-Amine, wie Triäthylendiamin, Metallsalze, wie Kaliumacetat und organische Metallverbindungen, wie Dibutylzinndilaurat.

Das NCO/OH-, (NH)-Verhältnis liegt erfindungsgemäß zwischen 0,8:1 und 1,2:1 bevorzugt zwischen 0,95:1 und 1,15:1; dadurch wird ein K-Wert > 25, bevorzugt größer 35, erreicht.

Wenn die Menge des eingesetzten Diisocyanats geringer ist als angegeben, kann die Polyaddition nicht vollständig erfolgen, so daß es schwierig wird, zu den Verbindungen gemäß der Erfindung zu gelangen. Wenn auf der anderen Seite aber die Menge des zugesetzten Diisocyanats größer als vorstehend angegeben ist, führt der Überschuß an

Isocyanatgruppen gegenüber den Hydroxylgruppen zur Verfestigung des Reaktionsgemisches während der Reaktion oder Lagerung, bzw. der K-Wert wird nicht erreicht.

Die erfindungsgemäß hergestellten polymerisierbaren ungesättigten und urethanisierten Verbindungen können für sich allein, oder im Gemisch mit anderen an sich bekannten vernetzbaren Monomeren verwendet werden. In diesem Fall können sie gegebenenfalls auch zusätzlich mit polymerisierbaren Vinylmonomeren gemischt werden.

Die Aushärtung kann nach an sich bekannten Verfahren durchgeführt werden. Als solche Verfahren kommen beispielsweise das thermische Aushärten durch Erwärmen, die Bestrahlung mit aktinischem Licht oder die Bestrahlung mit ionisierender Strahlung in Frage. Wenn thermisches Aushärten durch Erwärmen erfolgt, werden vorzugsweise polymerisationsfördernde Reagenzien zugesetzt, wobei diese Reagenzien aus den zu diesem Zweck bekannten Stoffen ausgewählt werden können. Bei Aushärtung mit aktinischem Licht, z.B. UV-Licht ist ein Zusatz von üblichen Photosensibilisatoren, wie z.B. Benzoinäther, Benzophenon, Benzilketale, Acetophenone, Thioxanthone usw. im allgemeinen in Mengen von 0,3 bis 5 Gew.% bezogen auf ungesätttiges Polyurethan nötig.

Die erfindungsgemäß hergestellten polymerisierbaren Polyurethanelastomeren können zur Herstellung von Formkörpern, Laminaten, Klebstoffen, Überzugsmaterialien, Magnetbändern und anderen Artikeln verwendet werden.

Im Folgenden ist die Erfindung anhand von Ausführungsbeispielen erläutert.

Die in den Beispielen angegebenen Teile und Prozente sind, soweit nicht anders angegeben, Gewichtsteile und Gewichtsprozente.

In den Beispielen werden für die Einsatzstoffe folgende Abkürzungen verwendet:

| | | |
|---|---|---|
| NPG | = | Neopentylglykol |
| TR | = | Trimethylolpropan |
| BD-1,4 | = | Butandiol-1,4 |
| MDI | = | Diphenylmthandiisocyanat |
| DBA | = | Dibutylamin |
| THF | = | Tetrahydrofuran ($<$0,05 % $H_2O$) |
| DBZL | = | Dibutylzinndilaurat |
| PE 1010 | = | Polyester aus Adipinsäure und Butandiol-1,4 (MG = 1000) |
| EPDA | = | Acrylesterdiol hergestellt durch Umsetzung von Acrylsäure mit einem Bisglycidyläther von Bisphenol A, Epoxidäquivalentgewicht von ca. 190 |
| PhIC | = | Phenylisocyanat |

Beispiel 1

75 Teile PE 1010, 37,44 Teile NPG 38,9 Teile EPDA (70 %ig in Aceton), 1,34 Teile TR und 663 Teile THF werden unter Rühren auf 30°C aufgeheizt. Dann werden 131,2 Teile MDI sowie 0,125 Teile DBZL zugegeben. Das Gemisch erwärmt sich durch Reaktion auf ca. 50°C. Nun werden weitere 0,125 Teile DBZL zugesetzt und auf 60°C erwärmt. Bei Erreichen von 60°C (ca. 10 Min) werden nochmals 0,125 Teile DBZL zugegeben. Bei fortschreitender Reaktion (nach ca. 2 Std.) erhöht sich die Viskosität leicht. Nach Erreichen einer Viskosität von ca. 150 bis 200 cP (60°C) wird mit 470 Teilen THF auf 20 % verdünnt und die Reaktion durch Zugabe

von 10 Teilen DBA abgestoppt. Nach 5 Minuten wird mit 7 Teilen PhIC stabilisiert und abgekühlt.

Beispiel 2 und 3 werden nach der Fahrweise Beispiel 1 durchgeführt, eingesetzte Mengen siehe Tabelle 1.

Beispiel 4

210 Teile (0,42 Äquivalente) PE 1010, 32,4 Teile (0,72 Äquivalente) BD-1,4, 1,34 Teile TR (0,03 Äquivalente), 310,8 Teile EDPA (70 %ig in Aceton) (0,8 Äquivalente) und 208,75 Teile MDI (1,67 Äquivalente) sowie 726 Teile THF werden unter Rühren mit 0,125 Teilen DBZL katalysiert. Durch Eigenreaktion steigt die Temperatur in 30 Minuten auf ca. 45 bis 50°C an. Danach werden nochmals 0,125 Teile DBZL zugesetzt und auf 60°C aufgeheizt. Nach Reaktionsende (NCO = 0 %) wird das Produkt gekühlt.

Beispiel 5 wird nach der Fahrweise Beispiel 4 durchgeführt, eingesetzte Mengen siehe Tabelle 1.

Tabelle 1: Zusammensetzung der Beispiele

| Beispiel Nr. | Zusammensetzung (Äquivalente) PE 1010 | NPG | BD-1,4 | EPDA 70 %ig | TR | MDI | Trockengehalt % | Viskosität (cp) | K-Wert | Aussehen |
|---|---|---|---|---|---|---|---|---|---|---|
| 1 | 0,15 | 0,62 | - | 0,2 | 0,03 | 1,00 | 19,3 | 1200 | 77,5 | schwachtrübe Lsg. |
| 2 | 0,32 | - | 0,45 | 0,2 | 0,03 | 1,00 | 19,1 | 1500 | 78,4 | klare Lsg. |
| 3 | 0,15 | 0,72 | - | 0,1 | 0,03 | 1,00 | 19,6 | 380 | 66,3 | klare Lsg. |
| 4 | 0,42 | - | 0,72 | 0,8 | 0,03 | 1,67 | 45,5 | 250 | 28,7 | klare Lsg. |
| 5 | 0,42 | - | 0,92 | 0,8 | 0,03 | 1,87 | 45,5 | - | - | klare Lsg. (geliert nach dem Erkalten) |

Filmanfertigung:

| | |
|---|---|
| Aufziehen | mit Rakel auf Glasplatte aufgezogen:<br>Beispiel 1 bis 3 Filmdicke 200 µm naß<br>4 und 5 " 100 µm naß |
| Trocknung | 12 Stunden bei Raumtemperatur dann 6 Stunden bei $60^o$ im Umluftschrank<br>Schichtdicke trocken: 40 bis 50 µm |
| Elektronen-Bestrahlung | 15 m/min Bandgeschwindigkeit ≙ 7 MRad<br>160 KV beschleunigte Elektronen<br>unter $N_2$-Atmosphäre<br>$O_2$-Gehalt: 120 ppm |
| Film-Prüfung | 14 Tage nach Bestrahlung |

Tabelle 2: Filmprüfungsergebnisse

| Beispiel Nr. | unbestrahlt 25°/50°C $Q_R$ x) N/mm² | 25°/50°C E-Modul N/mm² | 25°/50° $H_{PAL}$ xx) S | ET°C xxx) | 25°/50°C $Q_R$ x) N/mm² | 25°/50°C E-Modul N/mm² | 25°/50°C $H_{PAL}$ xx) S | ET°C xxx) | Schicht-dicke µm |
|---|---|---|---|---|---|---|---|---|---|
| 1 | 36,6/19,8 | 700/88 | 137/80 | 140 | 56,6/27,3 | 810/180 | 148/88 | 168 | 40-50 |
| 2 | 48,1/32,3 | 25/11 | 21/21 | 130 | 57,6/48,6 | 100/ 31 | 35/29 | 182 | 40-50 |
| 3 | 25,8/10,2 | 620/39 | 142/63 | 107 | 49,8/18,7 | 760/180 | 147/76 | 143 | 40-50 |
| 4 | 3,4/ 0,8 | 24/<10 | 27/18 | 71 | 33,3/25,8 | 510/120 | 103/53 | 173 | 40-50 |
| 5 | 5,3/ 1,6 | 51/<10 | 27/21 | 100 | 37,7/20,0 | 600/150 | 70/43 | 204 | 40-50 |

x) $Q_R$ = Reißkraft

xx) $H_{PAL}$ = Pendelhärte nach König in sec.

xxx) ET = Erweichungspunkt

Alle bestrahlten Polymeren sind in THF unlöslich.

Patentansprüche

1. Verfahren zur Herstellung von polymerisierbaren, im wesentlichen linearen, thermoplastischen, in organischen Lösungsmitteln löslichen Polyurethanelastomeren mit Acrylesterseitengruppen aus Hydroxylgruppen enthaltenden Polyäthern und/oder Polyestern, Diisocyanaten und gegebenenfalls Kettenverlängerungsmitteln mit reaktionsfähigen Wasserstoffatomen, dadurch gekennzeichnet, daß die Polyurethane durch Umsetzung von Diisocyanaten mit einem Gemisch aus

a) Acrylesterdiolen mit Molekulargewichten von 146 bis 3000, die gegebenenfalls bis zu 30 Mol.% Acrylestertriole enthalten können,

b) anderen von (a) verschiedenen organischen Polyhydroxylverbindungen mit Molekulargewichten zwischen 400 und 5000
sowie gegebenenfalls

c) von (a) und (b) verschiedenen Diolen, Diaminen, Aminoalkoholen oder Triolen mit Molekulargewichten zwischen 61 und 400 und/oder Wasser

im NCO/OH-, (NH)-Verhältnis von 0,8:1 bis 1,2:1, mit der Maßgabe, daß pro Mol der Komponente (b) 1,4 bis 1,8 Mol Diisocyanat, 0 bis 15 Mol der Komponente (c) und 0,3 bis 6 Mol der Komponente (a) verwendet werden, erhalten werden.

2. Verfahren nach Anspruch 1, dadurch gekennzeichnet, daß die Polyurethane durch Umsetzung der Diisocyanate mit dem Gemisch der Komponenten a), b) und c) im

NCO/OH-, (NH)-Verhältnis von 0,95:1 bis 1,15:1 erhalten werden.

3. Verfahren nach Anspruch 1 oder 2, dadurch gekennzeichnet, daß den Polyurethanen 6 bis 50 Gew.% C-C-doppelbindungshaltige Mono- oder Polymere zugesetzt werden.

4. Verfahren nach einem der vorhergehenden Ansprüche, dadurch gekennzeichnet, daß als Komponente (a) Umsetzungsprodukte aus Bisphenol A-diglycidyläther oder 2,3-Epoxypropanol-1 mit Acryl- oder Methacrylsäure verwendet werden.

0033897

Europäisches Patentamt

# EUROPÄISCHER RECHERCHENBERICHT

Nummer der Anmeldung

EP 81 10 0584.2

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | DE - A - 2 353 855 (DAINIPPON INK AND CHEMICALS INC.)<br>* ganze Druckschrift *<br>& US - A - 3 966 681<br>-- | 1-4 | C 08 G 18/67<br>//C 09 D 3/72 |
| A | DE - A - 1 644 797 (FORD-WERKE)<br>* Seite 7, Zeilen 4 bis 6 *<br>& GB - A - 1 162 722<br>---- | | |

RECHERCHIERTE SACHGEBIETE (Int. Cl.³)

C 08 G 18/00
C 09 D 3/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 18-05-1981 | KRAIL |